Europäisches Patentamt

European Patent Office

Office européen des brevets

(11) Veröffentlichungsnummer: **0 346 503 B1**

# (12) EUROPÄISCHE PATENTSCHRIFT

(45) Veröffentlichungstag der Patentschrift: **01.07.92**

(21) Anmeldenummer: **88109325.6**

(22) Anmeldetag: **11.06.88**

(51) Int. Cl.⁵: **B25J 13/02**

## (54) **Programmiergriff.**

(43) Veröffentlichungstag der Anmeldung:
**20.12.89 Patentblatt 89/51**

(45) Bekanntmachung des Hinweises auf die
Patenterteilung:
**01.07.92 Patentblatt 92/27**

(84) Benannte Vertragsstaaten:
**AT BE CH DE ES FR GB GR IT LI NL SE**

(56) Entgegenhaltungen:
**DE-A- 3 211 992**
**FR-A- 2 434 426**
**US-A- 2 866 333**

(73) Patentinhaber: **Blomberg Robotertechnik GmbH**
**Voltastrasse 50**
**W-4730 Ahlen(DE)**

(72) Erfinder: **Richter, Hans**
**Oberländerstrasse 123**
**W-8900 Augsburg(DE)**

(74) Vertreter: **Charrier, Rolf, Dipl.-Ing.**
**Postfach 260 Rehlingenstrasse 8**
**W-8900 Augsburg 31(DE)**

Rank Xerox (UK) Business Services

**Beschreibung**

Die Erfindung betrifft eine Programmiervorrichtung nach dem Oberbegriff des Anspruches 1.

Eine solche Programmiervorrichtung ist Gegenstand der CH-A 639 310. Nach einer ersten Ausführungsform bestehen die Federn aus Zungen, auf denen Dehnmeßstreifen angeordnet sind. Nach einer zweiten Ausführungsform bestehen die Federn aus Blattfedern, die jeweils zwischen zwei induktiven Meßwertgebern angeordnet sind. Die am Mittelteil eingespannten Blattfedern tragen an Ihren Enden jeweils eine Kugel, gegen die jeweils zwei Anschläge der Hülse anliegen.

Beiden Ausführungsformen haftet der Nachteil an, daß die Federn bogenförmig deformiert werden und damit die Wegsensoren bogenförmige Deformationen messen. Ein weiterer Nachteil besteht darin, daß bei Bewegungen in den verschiedenen Achsrichtungen, nicht einwandfrei entzerrte Meßwerte erhalten werden. Nachteilig ist weiterhin, daß die Kräfte, die auf die Hülse ausgeübt werden müssen, um die Federn um ein bestimmtes Maß zu deformieren, durch die Federkennlinien der Federn vorgegeben sind. Es ist jedoch wünschenswert, diese Kräfte zu variieren, je nachdem, ob die Last, die das zu programmierende Glied des Handhabungsgeräts bewegt leicht oder schwer ist.

Es besteht die Aufgabe, die Programmiervorrichtung so zu verbessern, daß unverzerrte Meßwerte bei Realtivbewegungen zwischen Hülse und Mittelteil in den verschiedenen Achsrichtungen erhalten werden.

Gelöst wird diese Aufgabe mit den kennzeichnenden Merkmalen des Anspruches 1. Vorteilhafte Ausgestaltungen sind den Unteransprüchen entnehmbar.

Ein Ausführungsbeispiel wird nachfolgend anhand der Zeichnungen näher erläutert. Es zeigen:

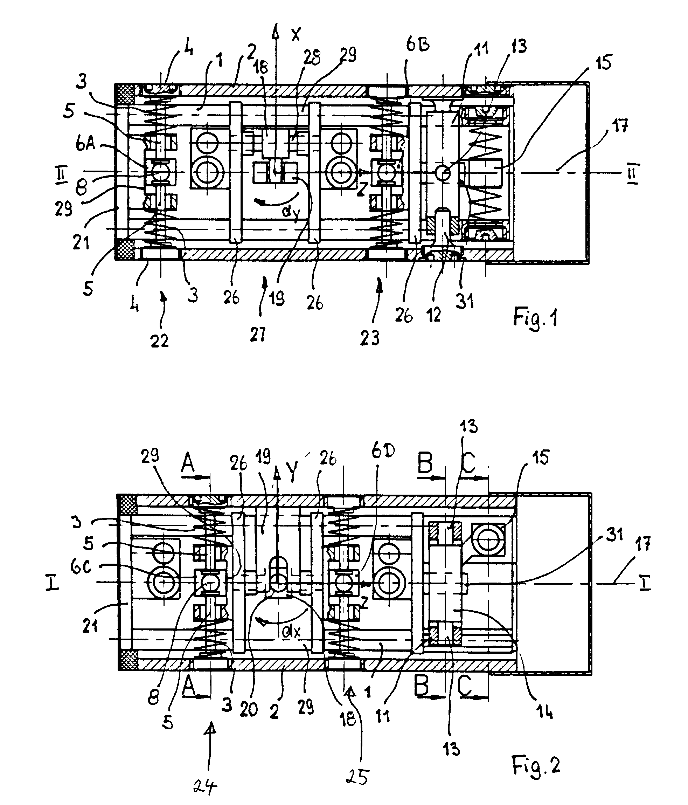

Fig. 1     einen Längsschnitt durch die Programmiervorrichtung längs der Linie I-I in Fig. 2;

Fig. 2     einen Längsschnitt durch die Programmiervorrichtung längs der Linie II-II in Fig. 1;

Fig. 3     einen Querschnitt längs der Linie A-A in Fig. 2;

Fig. 4     einen Querschnitt längs der Linie B-B in Fig. 2 und

Fig. 5     einen Querschnitt längs der Linie C-C in Fig. 2.

Die Programmiervorrichtung weist ein Mittelteil 1 auf, das über eine Anschlußplatte 21 starr mit dem zu programmierenden Glied des Handhabungsgeräts verbunden werden kann. Dieses Mittelteil 1 wird umgeben von einer Hülse 2, welche einen quadratischen Querschnitt aufweist. Das Mittelteil 1 weist eine Längsachse 17 auf.

Mit der Programmiervorrichtung gemäß dem Ausführungsbeispiel können Relativbewegungen zwischen dem Mittelteil 1 und der Hülse 2 in Richtung der Achsen X, Y und Z sowie Drehbewegungen dx, dy und dz um diese Achsen programmiert werden, wobei die Achsen X und Y rechtwinklig zueinander und zur Z Achse verlaufen, wobei letztere identisch ist mit der Längsachse 17 des Mittelteils 1.

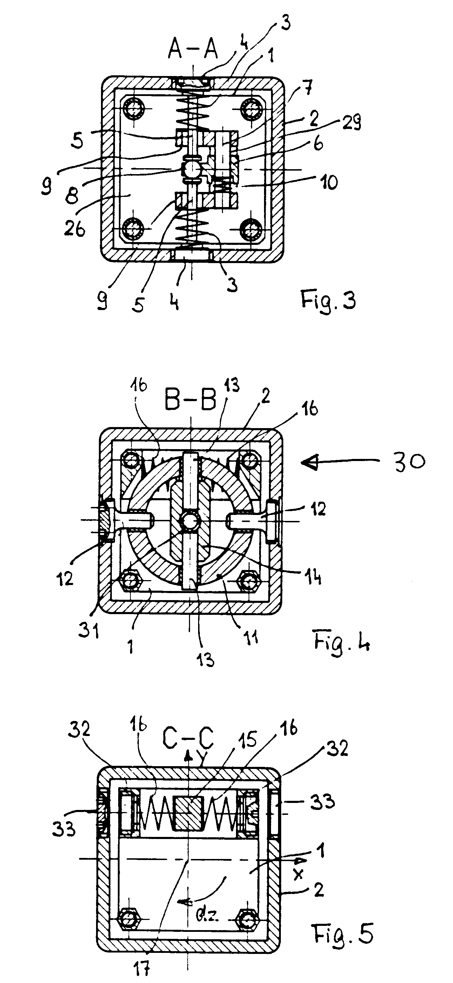

Zur Programmierung von Bewegungen in Richtung der Achse X und zur Programmierung von Drehbewegungen dy dienen die Meßsysteme 22 und 23, die im Abstand zueinander längs der Achse 17 angeordnet sind. Zur Programmierung von Bewegungen in Richtung der Achse Y und von Drehbewegungen dx dienen die Meßsysteme 24 und 25, die ebenfalls im Abstand zueinander längs der Achse 17 angeordnet sind. Die Meßsysteme 24 und 25 sind um 90° um die Achse 17 versetzt zu den Meßsystemen 22 und 23 angeordnet. Die Meßsysteme 22 bis 25 sind zueinander identisch und werden in ihrem Aufbau anhand der Fig. 3 erläutert.

Die Hülse 2 umgibt das Mittelteil 1 mit Spiel. Auf einer Platine 26 des Mittelteils, die quer zur Achse 17 verläuft, sind zwei Schenkel 9 einer Schlittenlagerung angeordnet, zwischen denen eine Welle 7 verläuft. Auf der Welle 7 ist verschiebbar ein Schlitten 6 gelagert. In die Hülse 2 sind in einander gegenüberliegenden Wandungen Einsätze 4 eingeschraubt, die jeweils einen Stift 5 tragen, die sich in Richtung der Längsachse 17 erstrecken. Die Enden der Stifte 5 weisen planparallele Flächen auf, zwischen denen eine Kugel 8 des Schlittens 6 möglichst spielfrei angeordnet ist. Da eine absolute Spielfreiheit nicht erzielbar ist, ist auf der Welle 7 eine Feder 10 angeordnet, welche sich einerseits am Schlitten 6 und andererseits an einem der Schenkel 9 abstützt. Die Stifte 5 werden umgeben von Wendelfedern 3, welche sich einerseits an der Hülse 2 und andererseits an den Schenkeln 9 abstützen. Wird ein Druck auf die Hülse 2 in Pfeilrichtung Y oder entgegen dieser Pfeilrichtung ausgeübt, dann wird der Schlitten 6 über die Stifte 5 linear verschoben. Auf der Platine 1 ist ein nicht dargestellter Wegsensor angeordnet, der dann die Relativbewegung zwischen dem Schlitten 6 und der Platine 26 mißt und in elektrische Signale umsetzt.

Die Schenkel 9 der Schlittenlagerung weisen Bohrungen auf, durch welche die Stifte 5 verlaufen. Da die Einsätze 4 herausschraubbar sind, ist es möglich, die Wendelfedern 3 gegen solche mit einer steileren oder flacheren Federkennlinie auszutauschen.

Bei Relativbewegungen zwischen Mittelteil 1 und Hülse 2 in Richtung der Achse X werden die Schlitten 6A und 6B der Meßsysteme 22 und 23 in gleicher Richtung verschoben. Bei Drehbewegungen dy um die Achse Y werden die Schlitten 6A und 6B in entgegengesetzter Richtung verschoben. Entsprechendes gilt für die Schlitten 6C und 6D bei einer Linearbewegung in Richtung der Achse Y bzw. bei einer Drehbewegung dx um die Achse X. Die Bewegungen der Schlitten 6A bis 6D werden jeweils durch die vorerwähnten Wegsensoren erfaßt.

Zwischen den Meßsystemen 24 und 25 ist ein weiteres Meßsystem 27 angeordnet, das der Erfassung von Relativbewegungen zwischen Hülse 2 und Mittelteil 1 in Richtung der Achse Z dient. Dieses Meßsystem 27 umfaßt eine Gabel 19, die an der Hülse 2 befestigt ist. Diese Gabel erstreckt sich nach innen bis zur Längsachse 17. Die Gabel 19 umfaßt eine Kugel 20 eines Schlittens 18, der auf einer parallel zur Längsachse 17 verlaufenden Welle 28 gelagert ist, welche zwischen den Platinen 26 verläuft. Findet eine Relativbewegung zwischen dem Mittelteil 1 und der Hülse 2 in Pfeilrichtung Z oder entgegen dieser Pfeilrichtung statt, dann wird der Schlitten 18 linear verschoben. An der Platine 29 ist wiederum ein Wegsensor angeordnet, der die Bewegungen des Schlittens 18 relativ zur Platine 29 erfaßt.

Die Schlittenlagerungen sind jeweils u-förmig ausgebildet und weisen einen flachen Mittelschenkel 29 auf, über den jeweils eine Flachseite eines Schlittens 6 gleitet, wodurch die Schlitten 6 verdrehfest auf den Wellen 7 gelagert sind. Dies gilt auch bezüglich der Flachseite des Schlittens 18 in bezug auf die Platine 29.

In Normallage, wenn keine Kräfte auf die Hülse 2 ausgeübt werden, liegen alle Kugeln 8, 20 auf der Längsachse 17.

Um Drehbewegungen dz um die Achse Z zu erfassen, ist ein weiteres Meßsystem 30 vorgesehen. Dieses Meßsystem weist einen die Achse 17 umgebenden Kardanring 11 auf, der von zwei ersten Lagerstiften 12 gelagert wird, die an zwei einander diametral gegenüberliegenden Wandungen der Hülse 2 befestigt sind. Diese Lagerstifte 12 verlaufen koaxial zueinander. Der Kardanring 11 wird von den Lagerstiften 12 verschiebbar gelagert. Zwei weitere Lagerstifte 13 sind an einem Mittelstück 14 befestigt und verlaufen rechtwinklig zu den Lagerstiften 13. Diese Lagerstifte 13 verlaufen ebenfalls durch den Kardanring 11 hindurch, welcher längs dieser Stifte 13 verschiebbar ist. Das Mittelstück 14 wird von einem Lagerzapfen 31 des Mittelteils 1 gelagert, ist um diesen Lagerzapfen 31 drehbar und längs dieses Lagerzapfens verschiebbar. Der Lagerzapfen 31 umgibt die Längsachse 17.

Das Mittelstück 14 weist einen Arm 15 auf, der außerhalb der Längsachse 17 verläuft. Zwischen diesem Arm 15 und dem Mittelteil 1 sind jeweils zwei Wendelfedern 16 angeordnet, welche über Einsätze 32 und 33 am Mittelteil 1 bzw. der Hülse 2 austauschbar sind.

Wegen des relativ zu den Lagerstiften 12 und 13 verschiebbaren Kardanringes 11 werden keine Relativbewegungen zwischen dem Mittelteil 1 und der Hülse 2 in den Achsen X und Y und Drehbewegungen um diese Achsen herum auf das Mittelstück 14 übertragen. Übertragen werden jedoch Drehbewegungen dz um die Achse Z, die sich in einer Drehbewegung des Arms 15 um die Achse 17 auswirken, die von einem dort am Mittelteil 1 angeordneten Wegsensor erfaßt werden.

## Patentansprüche

1. Programmiervorrichtung für ein Handhabungsgerät mit einem Mittelteil (1), das mit einem Glied des Handhabungsgeräts, dessen Bewegungen zu programmieren sind, starr verbunden ist, mit einer das Mittelteil (1) umgebenden Hülse (2) umd mit zwischen Mittelteil (1) und Hülse (2) angeordneten Federn (3), die Relativbewegungen zwischen Mittelteil (1) und Hülse (2) entsprechend den zu programmierenden Richtungen ermöglichen sowie mit Wegsensoren, die die Relativbewegungen messen und in elektrische Signale umsetzen, dadurch **gekennzeichnet**, daß zur Programmierung in eine senkrecht zur Längsachse (17) des Mittelteils (1) verlaufenden Achsrichtung mit der Hülse (2) ein Schlitten (6) verbunden ist, der in diese Achsrichtung linear verschiebbar am Mittelteil (1) gelagert ist, zwischen der Hülse (2) und dem Mittelteil (1) beidseits des Schlittens (6) je eine in diese Achsrichtung komprimierbare Wendelfeder (3) angeordnet ist und die Relativbewegung zwischen Schlitten (6) und Mittelteil (1) gemessen wird.

2. Programmiervorrichtung nach Anspruch 1, dadurch **gekennzeichnet**, daß an der Hülse (2) zwei in diese Achsrichtung koaxial verlaufende und sich zur Längsachse (17) hin erstreckende Stifte (5) angeordnet sind, zwischen deren Enden der Schlitten (6) spielfrei gehalten wird.

3. Programmiervorrichtung nach Anspruch 2, dadurch **gekennzeichnet**, daß das zwischen den Stiftenden gehaltene Schlittenteil eine Kugel (8) ist.

4. Programmiervorrichtung nach Anspruch 1 oder 2, dadurch **gekennzeichnet**, daß zwischen der Schlitten - lagerung und dem Schlitten (6) eine Feder (10) angeordnet ist, die den Schlitten (6) in Richtung eines Stiftendes drückt.

5. Programmiervorrichtung nach Anspruch 2, dadurch **gekennzeichnet**, daß die Wendelfedern (3) um die Stifte (5) herum angeordnet sind und sich einerseits an Schenkeln (9) der Schlittenlagerung und sich andererseits an von der Hülse (2) lösbaren Einsätzen (4) abstützen.

6. Programmiervorrichtung nach einem der Ansprüche 1 bis 5, dadurch **gekennzeichnet**, daß zur Programmierung in zwei senkrecht zueinander und senkrecht zur Längsachse verlaufenden Achsrichtungen sowie zur Programmierung von Drehbewegungen um diese Achsrichtung zwei erste in der einen Achsrichtung linear verschiebbare und zwei zweite in der anderen Achsrichtung linear verschiebbare Schlitten (6A, 6B, 6C, 6D) mit zugeordneten Wendelfedern (3) vorgesehen sind, die jeweils im Abstand längs der Längsachse (17) angeordnet sind.

7. Programmiervorrichtung nach einem der Ansprüche 1 bis 6, dadurch **gekennzeichnet**, daß zur Programmierung der in Längsachse (17) verlaufenden Achsrichtung mit der Hülse (2) ein dritter Schlitten (18) verbunden ist, der in Richtung der Längsachse (17) verschiebbar am Mittelteil (1) gelagert ist und die Hülse (2) eine in Richtung der Längsachse (17) weisende Gabel (19) aufweist, die eine Kugel (20) des dritten Schlittens (18) umgreift und die Relativbewegung zwischen dem dritten Schlitten (18) und dem Mittelteil (1) gemessen wird.

8. Programmiervorrichtung nach einem der Ansprüche 1 bis 7, dadurch **gekennzeichnet**, daß zur Programmierung einer Drehbewegung um die Längsachse (17) zwischen der Hülse (2) und dem Mittelteil (1) ein Kardangelenk angeordnet ist, welches Freiheitsgerade in senkrecht zueinander und senkrecht zur Längsachse verlaufenden Achsrichtungen und Freiheitsgrade in Drehrichtung um diese Achsrichtungen aufweisen.

9. Programmiervorrichtung nach Anspruch 8, dadurch **gekennzeichnet**, daß das Kardangelenk einen die Längsachse (17) umgebenden Ring (11) aufweist, der von zwei zueinander diametral gegenüberliegenden ersten Lagerstiften (12) der Hülse (2) gelagert wird, dieser Ring (11) über zwei zweite Lagerstifte (13), die rechtwinklig zu den ersten Lagerstiften (12) verlaufen, ein Mittelstück (14), das um die Längsachse (17) drehbar gelagert ist, lagern, der Ring (11) realtiv zu den Lagerstiften (12, 13) verschiebbar ist und die Drehbewegung des Mittelstücks (14) relativ zum Mittelteil (1) gemessen wird.

10. Programmiervorrichtung nach Anspruch 9, dadurch **gekennzeichnet**, daß zwischen einem Arm (15) des Mittelstücks (14) und dem Mittelteil (1) zwei Wendelfedern (16) angeordnet sind und der Arm außerhalb der Längsachse (17) verläuft.

11. Programmiervorrichtung nach einem der Ansprüche 3 bis 6, dadurch **gekennzeichnet**, daß die Kugel (8) zwischen parallelen Planflächen an den Stiftenden angeordnet ist.

12. Programmiervorrichtung nach einem der Ansprüche 1 bis 11, dadurch **gekennzeichnet**, daß die Hülse (2) einen quadratischen Querschnitt aufweist.

13. Programmiervorrichtung nach einem der Ansprüche 3 bis 12, dadurch **gekennzeichnet**, daß die Kugeln (8, 20) in Normallage der Hülse (2) realtiv zum Mittelteil (1) auf der Längsachse (17) angeordnet sind.

**Claims**

1. A programming device for a robot comprising a central part (1) which is rigidly connected to an element of the robot, the movements of which are to be programmed, comprising a sleeve (2) which encloses the central part (1), and comprising springs (3) which are arranged between the central part (1) and the sleeve (2) and which permit relative movements between the central part (1) and the sleeve (2) in, accordance with the directions which are to be programmed, and comprising position sensors by which the relative movements are measured and converted into electrical signals, characterised in that for programming in an axial direction extending at right angles to the longitudinal axis (17) of the central part (1), the sleeve (2) is connected to a slide (6) which is mounted on the central part (1) so as to be linearly displaceable in the axial direction, a respective helical spring (3) which is compressible in this axial direction is arranged between the sleeve (2) and the central part (1) on both sides of the slide (6), and the relative movement between the slide (6) and the central part (1) is measured.

2. A programming device as claimed in Claim 1, characterised in that two pins (5), which are disposed coaxially in this axial direction and which extend in the direction of the longitudinal axis (17), are arranged on the sleeve (2) where the slide (6) is retained without play between the ends of said pins (5).

3. A programming device as claimed in Claim 2, characterised in that the part of the slide retained between the ends of the pins is a ball (8).

4. A programming device as claimed in Claim 1 or 2, characterised in that a spring (10) is arranged between the slide bearing and the slide (6), which spring (10) urges the slide (6) in the direction of the end of a pin.

5. A programming device as claimed in Claim 2, characterised in that the helical springs (3) are arranged around the pins (5) and on one side bear against flanks (9) of the slide bearing and on the other side bear against inserts (4) which are detachable from the sleeve (2).

6. A programming device as claimed in one of Claims 1 to 5, characterised in that for programming in two axial directions which extend at right angles to one another and at right angles to the longitudinal axis, and for the programming of rotational movements about this axial direction, two first slides (6A, 6B), linearly displaceable in one axial direction, and two second slides (6C, 6D), linearly displaceable in the other axial direction, with assigned helical springs (3), are provided, which are each arranged at intervals along the longitudinal axis (17).

7. A programming device as claimed in one of Claims 1 to 6, characterised in that for programming in the axial direction extending in the direction of the longitudinal axis (17), the sleeve (2) is connected to a third slide (18) which is mounted on the central part (1) so as to be displaceable in the direction of the longitudinal axis (17), and the sleeve (2) comprises a fork (19) which faces in the direction of the longitudinal axis (17) and which embraces a ball (20) of the third slide (18), and the relative movement between the third slide (18) and the central part (1) is measured.

8. A programming device as claimed in one of Claims 1 to 7, characterised in that for the programming of a rotational movement about the longitudinal axis (17), a cardan joint is arranged between the sleeve (2) and the central part (1), which cardan joint possesses degrees of freedom in axial directions extending at right angles to one another and at right angles to the longitudinal axis and degrees of freedom in the rotational direction about these axial directions.

9. A programming device as claimed in Claim 8, characterised in that the cardan joint comprises a ring (11) which surrounds the longitudinal axis (17) and which is supported by two diametrally opposed, first bearing pins (12) of the sleeve (2), that via two second bearing pins (13) extending at right angles to the first bearing pins (12) the said ring (11) supports a central component (14) which is mounted so as to be rotatable about the longitudinal axis (17), that the ring (11) is displaceable relative to the bearing pins (12, 13), and that the rotational movement of the central component (14) relative to the central part (1) is measured.

10. A programming device as claimed in Claim 9, characterised in that two helical springs (16) are arranged between an arm (15) of the central component (14) and the central part (1), and the arm extends outside of the longitudinal axis (17).

11. A programming device as claimed in one of Claims 3 to 6, characterised in that the ball (8) is arranged between parallel planar surfaces at the ends of the pins.

12. A programming device as claimed in one of Claims 1 to 11, characterised in that the sleeve (2) has a square cross-section.

13. A programming device as claimed in one of Claims 3 to 12, characterised in that in the normal position of the sleeve (2) relative to the central part (1) the balls (8, 20) are arranged on the longitudinal axis (17).

**Revendications**

1. Dispositif de programmation pour un appareil à actionnement manuel, comprenant une partie médiane (1) reliée rigidement à un organe de l'appareil à actionnement manuel dont les mouvements doivent être programmés ; une douille (2) entourant la partie médiane (1) ; des ressorts (3) qui sont interposés entre la partie médiane (1) et la douille (2) et autorisent, entre ladite partie médiane (1) et ladite douille (2), des mouvements relatifs correspondant aux directions devant être programmées ; ainsi que des détecteurs de courses qui mesurent les mouvements relatifs, et les convertissent en des signaux électriques, caractérisé par le fait qu'un coulisseau (6), relié à la douille (2) en vue de la programmation dans une direction axiale s'étendant perpendiculairement à l'axe longitudinal (17) de la partie médiane (1), est monté sur ladite partie médiane (1) avec faculté de coulissement linéaire dans cette direction axiale ; un ressort hélicoïdal (3), pouvant être comprimé dans cette direction axiale, est respectivement interposé entre la douille (2) et la partie médiane (1), de part et d'autre du coulisseau (6) ; et le mouvement relatif entre le coulisseau (6) et la partie médiane (1) est mesuré.

2. Dispositif de programmation selon la revendication 1, caractérisé par le fait que deux goujons (5), implantés sur la douille (2), s'étendent coaxialement dans cette direction axiale et vers l'axe longitudinal (17), le coulisseau (6) étant retenu, sans aucun jeu, entre les extrémités desdits goujons.

3. Dispositif de programmation selon la revendication 2, caractérisé par le fait que la partie du coulisseau, retenue entre les extrémités des goujons, consiste en une bille (8).

4. Dispositif de programmation selon la revendication 1 ou 2, caractérisé par le fait qu'un ressort (10), interposé entre le coulisseau (6) et la pièce de montage de ce coulisseau, pousse ledit coulisseau (6) en direction d'une extrémité d'un goujon.

5. Dispositif de programmation selon la revendication 2, caractérisé par le fait que les ressorts hélicoïdaux (3), agencés périphériquement autour des goujons (5), prennent appui d'une part contre des branches (9) de la pièce de montage du coulisseau et, d'autre part, contre des pièces encastrées (4) dissociables de la douille (2).

6. Dispositif de programmation selon l'une des revendications 1 à 5, caractérisé par le fait que, en vue de la programmation dans deux directions axiales s'étendant perpendiculairement l'une à l'autre et perpendiculairement à l'axe longitudinal, ainsi qu'en vue de la programmation de mouvements rotatoires autour de cette direction axiale, l'on a prévu deux premiers et deux deuxièmes coulisseaux (6A, 6B, 6C, 6D) avec des ressorts hélicoïdaux associés (3), qui peuvent respectivement accomplir des coulissements linéaires dans l'une des directions axiales, et dans l'autre direction axiale, et sont respectivement agencés à distance le long de l'axe longitudinal (17).

7. Dispositif de programmation selon l'une des revendications 1 à 6, caractérisé par le fait qu'un troisième coulisseau (18), relié à la douille (2) en vue de la programmation de la direction axiale s `étendant selon l'axe longitudinal (17), est monté sur la partie médiane (1) avec faculté de coulissement dans la direction de l'axe longitudinal (17) ; la douille (2) présente une fourche (19) orientée en direction de l'axe longitudinal (17), et emprisonnant une bille (20) du troisième coulisseau (18) ; et le mouvement relatif entre le troisième coulisseau (18) et la partie médiane (1) est mesuré.

8. Dispositif de programmation selon l'une des revendications 1 à 7, caractérisé par le fait qu'une articulation à la Cardan, interposée entre la douille (2) et la partie médiane (1) en vue de la programmation d'un mouvement rotatoire autour de l'axe longitudinal (17), possède des degrés de liberté dans des directions axiales mutuellement perpendiculaires et perpendiculaires à l'axe longitudinal, ainsi que des degrés de liberté dans le sens de rotation autour de ces directions axiales.

9. Dispositif de programmation selon la revendication 8, caractérisé par le fait que l'articulation à la Cardan présente une bague (11) ceinturant l'axe longitudinal (17), et dont le montage est assuré par deux premières chevilles de portée (12) de la douille (2), diamétralement opposées l'une à l'autre ; par l'intermédiaire de deux secondes chevilles de portée (13) s'étendant à angle droit par rapport aux premières chevilles de portée (12), cette bague (11) assure le montage d'une pièce centrale (14) montée à rotation autour de l'axe longitudinal (17) ; la bague (11) peut coulisser par rapport aux chevilles de portée (12, 13) ; et le mouvement rotatoire de la pièce centrale (14), par rapport à la partie médiane (1), est mesuré.

10. Dispositif de programmation selon la revendication 9, caractérisé par le fait que deux ressorts hélicoïdaux (16) sont interposés entre la partie médiane (1) et un bras (15) de la pièce centrale (14) ; et le bras s'étend à l'extérieur de l'axe longitudinal (17).

11. Dispositif de programmation selon l'une des revendications 3 à 6, caractérisé par le fait que la bille (8) est intercalée, aux extrémités des goujons, entre des surfaces planes parallèles.

12. Dispositif de programmation selon l'une des revendications 1 à 11, caractérisé par le fait que la douille (2) présente une section transversale carrée.

13. Dispositif de programmation selon l'une des revendications 3 à 12, caractérisé par le fait que, lorsque la douille (2) occupe une position normale par rapport à la partie médiane (1), les billes (8, 20) sont situées sur l'axe longitudinal (17).

Fig. 1

Fig. 2

Fig. 3

Fig. 4

Fig. 5